# EUROPEAN PATENT SPECIFICATION

(11) **EP 3 908 083 B1**
(45) Date of publication and mention of the grant of the patent: **06.03.2024**
(21) Application number: 20172934.0
(22) Date of filing: 05.05.2020
(51) Int. Cl.: H05B 45/20, H05B 45/10, H05B 47/115, H05B 47/125, H05B 47/13, H05B 47/19

(54) **A MANAGEMENT SYSTEM AND A METHOD FOR CONTROLLING LUMINAIRES**
VERWALTUNGSSYSTEM UND VERFAHREN ZUR STEUERUNG VON LEUCHTEN
SYSTÈME DE GESTION ET PROCÉDÉ DE COMMANDE DE LUMINAIRES

(43) Date of publication of application: 10.11.2021
(73) Proprietor: Helvar Oy Ab, 02150 Espoo (FI)
(72) Inventor: JUSLÉN, Henri, 02150 Espoo (FI)
(74) Representative: Väänänen, Janne Kalervo

(56) References cited:
- US-A1- 2014 312 777
- US-A1- 2018 255 622

## Description

### Field of the disclosure

The disclosure relates generally to illuminating engineering. More particularly, the disclosure relates to a system for controlling luminaires. Furthermore, the disclosure relates to a method and to a data processor program for controlling luminaires.

### Background

A lighting system of a large space comprises typically a plurality of luminaires for illuminating different sub-areas of the space. To save energy, the lighting system can be arranged to dim down luminaires which illuminate unoccupied sub-areas of the space. This may cause however visual discomfort due to obvious variation in a level of light between occupied sub-areas of the space and unoccupied sub-areas where the lights have been dimmed down.

Publication JP2000252084 discloses a lighting system configured to produce light environment suitable for a human biological rhythm such as e.g. a circadian rhythm or the like. The lighting system comprises a luminaire capable of emitting high illumination light, middle illumination light, and low illumination light. The lighting system comprises a management device that controls the luminaire so that the luminaire emits high illumination light in a first time slot from morning to early evening. The management device then controls the luminaire to emit middle illumination light in a second time slot from the early evening to bedtime. The management device further controls the luminaire to emit low illumination light in a third time slot from the bedtime to next morning.

The lighting system described in the above-mentioned publication JP2000252084 does not however provide a solution to the above-mentioned challenge related to large spaces where there is a need to dim down luminaires in unoccupied sub-areas of the space while maintaining a level of light on occupied sub-areas of the space.

Publication US2014312777 describes a method for controlling the color temperature of a composite light source including at least one discrete-spectrum light source. The method comprises: receiving sensor information from one or more sensors, determining respective color temperature values for one or more controllable-color-temperature lighting loads "CCTLLs" based on the sensor information, and controlling the one or more CCTLLs to operate the one or more CCTLLs at the respective color temperature values. Each of the one or more CCTLLs vary the color temperature of emitted light by adjusting an intensity level of at least one discrete-spectrum light source.

### Summary

The invention relates to a management system for controlling luminaires according to the appended claim 1, to a method of controlling luminaires according to the appended claim 11, to a data processor program for controlling luminaires according to the appended claim 13, and to a data processor program product comprising a non-transitory processor readable medium according to the appended claim 14. Further features are disclosed in the dependent claims.

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying embodiments of the invention.

In accordance with the invention, there is provided a new management system for controlling luminaires. The management system comprises:
- presence sensors configured to produce occupancy data indicative of occupancies on sub-areas of a space illuminated with the luminaires, and
- a control system responsive to the occupancy data and configured to dim down one or more of the luminaires in response to a situation in which the occupancy data indicates that the sub-area illuminated by the one or more luminaires is unoccupied.

The above-mentioned control system is configured to increase the color temperature of light emitted by the one or more luminaires in response to the situation in which the occupancy data indicates that the sub-area illuminated by the one or more luminaires is unoccupied. The color temperature can be for example in the range from 3000K to 4000K in occupied sub-areas, and after dimming in unoccupied sub-areas the increased color temperature can be e.g. about 100K higher i.e. in the range from 3100K to 4100K.

The management system according to the invention utilizes the phenomenon that white light having a higher color temperature is perceived as brighter compared to white light having a lower color temperature with a same illuminance i.e. lux-level. Therefore, the management system provides lighting that appears substantially uniform even though energy is conserved by dimming some of the luminaires.

In accordance with the invention, there is provided also a new lighting system that comprises:
- luminaires configured to illuminate a space, and
- a management system according to the invention and configured to control the luminaires.

In accordance with the invention, there is provided also a new method for controlling luminaires. The method comprises:
- receiving, from presence sensors, occupancy data indicative of occupancies on sub-areas of a space illuminated with the luminaires,
- dimming down one or more of the luminaires in response to a situation in which the occupancy data indicates that the sub-area illuminated by the one or more luminaires is unoccupied, and
- increasing color temperature of light emitted by the one or more luminaires in response to the situation in which the occupancy data indicates that the sub-area illuminated by the one or more luminaires is unoccupied.

In accordance with the invention, there is provided also a new data processor program for controlling luminaires. The data processor program comprises instructions for controlling a programmable data processor system to:
- receive, from presence sensors, occupancy data indicative of occupancies on sub-areas of a space illuminated with the luminaires,
- dim down one or more of the luminaires in response to a situation in which the occupancy data indicates that the sub-area illuminated by the one or more luminaires is unoccupied, and
- control the one or more luminaires to increase color temperature of light emitted by the one or more luminaires in response to the situation in which the occupancy data indicates that the sub-area illuminated by the one or more luminaires is unoccupied.

The above-mentioned data processor program can be called a computer program provided that a computer is understood in a broad sense so that e.g. a programmable controller or another programmable device is deemed to be a computer.

In accordance with the invention, there is provided also a new data processor program product. The data processor program product comprises a non-volatile data processor readable medium encoded with a data processor program according to the invention.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of also un-recited features.

The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments and their advantages are explained in greater detail below with reference to the accompanying drawings, in which:
figure 1 illustrates a lighting system according to an exemplifying and non-limiting embodiment,
figure 2 illustrates a lighting system according to another exemplifying and non-limiting embodiment, and
figure 3 shows a flowchart of a method according to an exemplifying and non-limiting embodiment for controlling luminaires.

### Description of exemplifying and non-limiting embodiments

The specific examples provided in the description below should not be construed as limiting the scope and/or the applicability of the accompanied claims. Lists and groups of examples provided in the description below are not exhaustive unless otherwise explicitly stated.

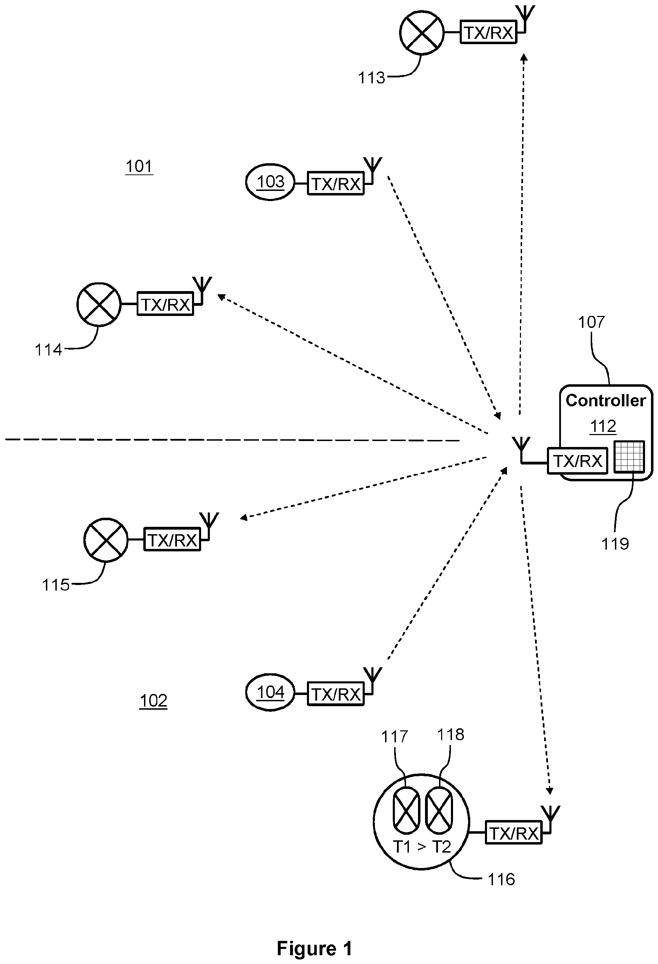

Figure 1 illustrates a lighting system according to an exemplifying and non-limiting embodiment. The lighting system comprises luminaires 113, 114, 115, and 116 configured to illuminate a space. The level of light and the color temperature of light emitted the luminaires 113, 114, 115, and 116 are controllable in accordance with inputs given by one or more users and/or automatically. The lighting system comprises a management system according to an exemplifying and non-limiting embodiment for controlling the luminaires 113-116. The management system comprises presence sensors 103 and 104 configured to produce occupancy data indicative of occupancies on sub-areas of the space illuminated with the luminaires. In the exemplifying case shown in figure 1, the presence sensors are placed apart from the luminaires so that the presence sensor 103 produces occupancy data indicative of occupancy on a sub-area 101 and the presence sensor 104 produces occupancy data indicative of occupancy on a sub-area 102. Each of the presence sensor 103 and 104 may comprise for example a passive infrared "PIR" sensor for detecting presence through motion, a thermal camera, a low-resolution optical camera, a gigahertz-radar, a sound sensor, a pressure sensor e.g. in chairs, and/or an occupant counter for monitoring traffic through e.g. a door or another passageway.

The management system comprises a control system 107 responsive to the above-mentioned occupancy data. The control system 107 is configured to dim down one or more of the luminaires 113-116 in response to a situation in which the occupancy data indicates that the sub-area illuminated by the one or more luminaires is unoccupied. Furthermore, the control system 107 is configured to increase the color temperature of light emitted by the one or more luminaires in response to the situation in which the occupancy data indicates that the sub-area illuminated by the one or more luminaires is unoccupied. In an exemplifying case in which the presence sensors comprise passive infrared "PIR" sensors, a period or several minutes without detected motion is advantageously required for considering a sub-area to be unoccupied whereas a single detected motion is sufficient for considering the sub-areas to be occupied. Furthermore, the dimming of the light level and the increase of the color temperature is advantageously carried out smoothly, e.g. during a period of several minutes, to avoid distinctive and disturbing changes in the lighting conditions. The color temperature can be for example in the range from 3000K to 4000K in occupied sub-areas, and after dimming in unoccupied sub-areas the increased color temperature can be e.g. 100K higher i.e. in the range from 31 00K to 4100K.

In the exemplifying management system illustrated in figure 1, the control system 107 comprises a central controller 112 that is communicatively connected with data transfer links to the luminaires 113-116 and to the presence sensors 103 and 104. In figure1, the data transfer links are depicted with dashed line arrows. In this exemplifying case, the data transfer links are wireless data transfer links that can be based on e.g. the Bluetooth Low Energy "BLE" network technology, the Zigbee network technology, or the Thread network technology. It is however also possible that the data transfer links are corded links. Power supply to the presence sensors 103 and 104 can be arranged with separate power lines or using wires of corded data transfer links. For example, the Power over Ethernet "PoE" technology can be used for supplying power via corded data transfer links. For example, a management system according to an exemplifying and non-limiting embodiment of the invention can be implemented in a corded data transfer system that uses the Digital Addressable Lighting Interface "DALI" technology. In principle, the DALI technology is applicable in conjunction with wireless data transfer technologies, too.

In a lighting system according to an exemplifying and non-limiting embodiment, each of the luminaires 113-116 comprises at least two light emitting elements having different color temperatures. Figure 1 shows schematically the light emitting elements 117 and 118 of the luminaire 116. The light emitting element 117 emits light whose color temperature is T1 and the light emitting element 118 emits light whose color temperature is T2 that is lower than T1. The color temperature of the light emitted by the luminaire 116 can be varied by varying relative emission intensities of the two light emitting elements 117 and 118. Each of the light emitting elements 117 and 118 may comprise e.g. one or more light emitting diodes "LED". The other luminaires 113-115 can be like the luminaire 116. In a management system according to an exemplifying and non-limiting embodiment, the control system 107 is configured to control input powers of at least two light emitting elements of each luminaire in order to control the color temperature of light emitted by the luminaire under consideration.

In a management system according to an exemplifying and non-limiting embodiment, the control system 107 is configured to control intensity and/or the color temperature of light emitted by the luminaires 113-116 in accordance with a time of day and based on a predetermined rule. The intensity and/or the color temperature of the light can be varied during the day to support the circadian rhythm of people within an area being illuminated. In many cases, bright and cool white light i.e. high color temperature is used in the morning, then gradually shifting to warmer white light i.e. to lower color temperature and possibly lower intensity towards the evening.

The exemplifying management system illustrated in figure 1 comprises a user interface 119 which enables users to control the light level and/or the color temperature. The user interface can be e.g. a wall panel which allows a user to select e.g. one of preset light level - color temperature pairs, or the wall panel may have some other kind of user interface for enabling a user to adjust the light level and/or the color temperature. In an exemplifying case where the luminaires are communicatively accessible with e.g. the Bluetooth Low Energy "BLE" network technology or similar, a user may control the luminaires with a mobile phone or a computer into which the user may have stored favorite settings related to lighting conditions. In an exemplifying case, the user interface enables users to give feedback on the comfort level of lighting. An exemplifying way to utilize the feedback is such that the central controller 112 is configured to change a level of dimming and/or a level of increase in the color temperature in response to a situation in which the feedback manifests a low comfort level. Feedback manifesting a low comfort level is a symptom of visual discomfort due to obvious variation in a level of light between occupied areas and unoccupied areas where the lights have been dimmed down. The user interface 119 can be configured to enable the users to give specifying feedback which specifies in which respects the comfort level of the lighting is good and correspondingly weak, and the central controller 112 can be configured to tune the level of dimming and/or the level of increase in the color temperature based on the specifying feedback.

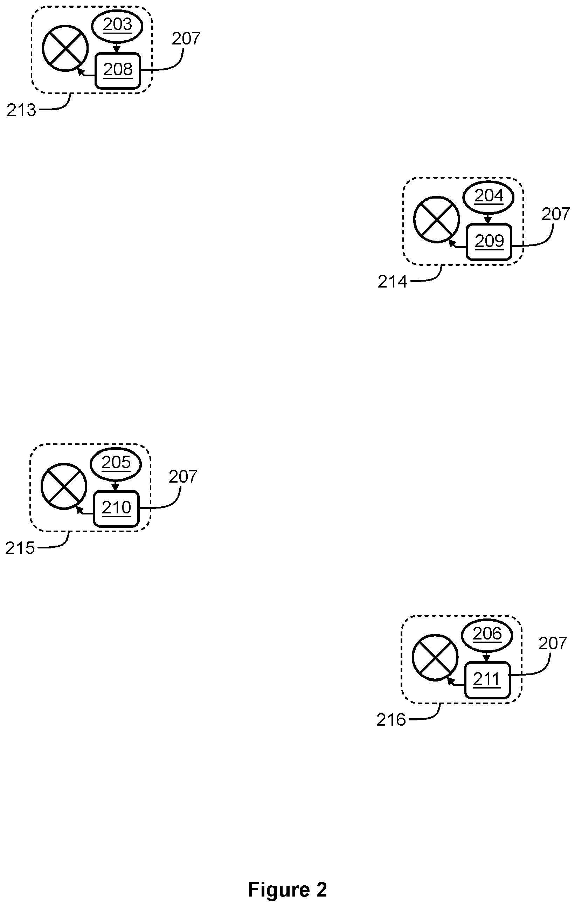

Figure 2 illustrates a lighting system according to an exemplifying and non-limiting embodiment. The lighting system comprises luminaires 213, 214, 215, and 216 configured to illuminate a space. The lighting system comprises a management system according to an exemplifying and non-limiting embodiment for controlling the luminaires 213-216. The management system comprises presence sensors 203, 204, 205, and 206 configured to produce occupancy data indicative of occupancies on sub-areas of the space illuminated with the luminaires. In the exemplifying case shown in figure 2, the presence sensors 203-206 are installed in the luminaires 213-216 and each of the presence sensors is configured to monitor a sub-area illuminated mainly by the luminaire in which the presence sensor is installed.

The management system comprises a control system 207 responsive to the above-mentioned occupancy data. The control system 207 is configured to dim down each of the luminaires 213-216 in response to a situation in which the occupancy data indicates that the sub-area illuminated by the luminaire under consideration is unoccupied. Furthermore, the control system 207 is configured to increase the color temperature of light emitted by the luminaire in response to the situation in which the occupancy data indicates that the sub-area illuminated by the luminaire is unoccupied.

In the exemplifying management system illustrated in figure 2, the control system 207 comprises controllers 208, 209, 210, and 211 installed in the luminaires 213-216. Each of the controllers 208-211 is configured to control the luminaire in which the controller is installed.

It is to be noted that management systems according to different embodiments of the invention can be implemented according to many different architectures. Two exemplifying architectures are presented in figures 1 and 2. For a third example, luminaires can be provided with presence sensors as shown in figure 2 and the control of the luminaires can be implemented in a centralized way with a central controller that is communicatively connected to the luminaires. For a fourth example, luminaires can be provided with controllers configured to receive occupancy data from presence sensors placed apart from the luminaires and each of the controllers is configured to control the luminaire in which the controller under consideration is installed. For a fifth example, a lighting system may comprise a central controller configured to control intensity and/or the color temperature of luminaires in accordance with a predetermined schedule irrespective of an occupancy situation, and the luminaires can be provided with controllers configured to receive occupancy data from presence sensors installed in the luminaires or apart from the luminaires. In this example, the controllers provided in the luminaires adjust the intensity and color temperature of the luminaire according to the occupancy of the sub-area. Thus, management systems according to different embodiments of the invention are not limited to any specific implementation architectures.

The central controller 112 shown in figure 1 can be implemented with one or more data processors each of which can be a programmable data processor provided with an appropriate software, a dedicated hardware data processor such as for example an application specific integrated circuit "ASIC", and/or a configurable hardware data processor such as for example a field programmable gate array "FPGA". Furthermore, the central controller 112 may comprise one or more memory devices such as e.g. a random-access memory "RAM" circuit. Correspondingly, a distributed control system, such as the control system 207 shown in figure 2, can be implemented with data processors and memory devices placed in communicatively interconnected devices.

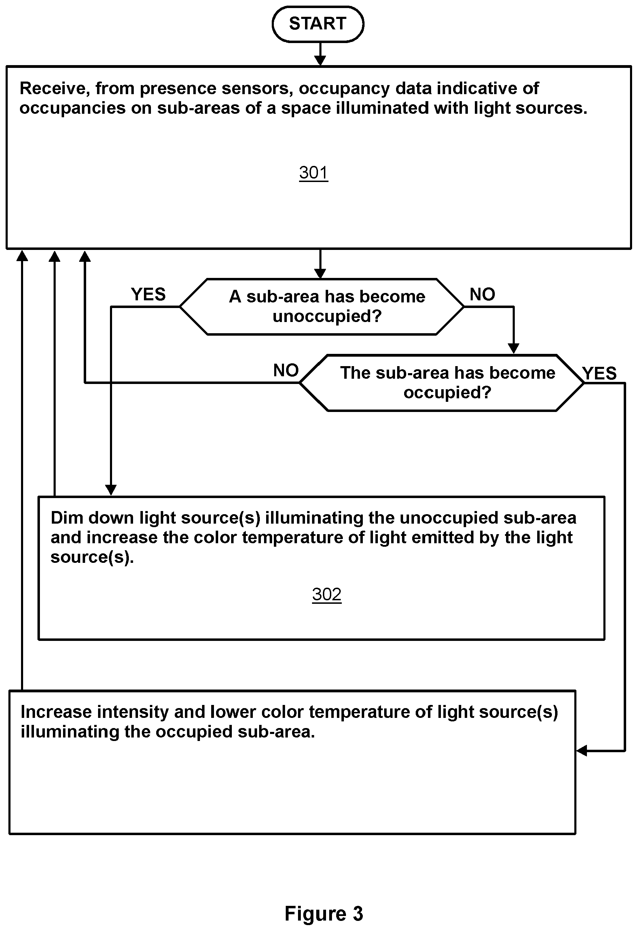

Figure 3 shows a flowchart of a method according to an exemplifying and non-limiting embodiment for controlling luminaires. The method comprises the following actions:
- action 301: receiving, from presence sensors, occupancy data indicative of occupancies on sub-areas of a space illuminated with the luminaires, and
- actions 302: dimming down one or more of the luminaires and increasing color temperature of light emitted by the one or more luminaires in response to a situation in which the occupancy data indicates that the sub-area illuminated by the one or more luminaires is unoccupied.

A method according to an exemplifying and non-limiting embodiment comprises controlling input powers of at least two light emitting elements having different color temperatures in order to control the color temperature of light emitted by a luminaire comprising the at least two light emitting elements.

In a method according to an exemplifying and non-limiting embodiment, each of the presence sensors comprises at least one of the following: a passive infrared sensor for detecting presence through motion, a thermal camera, a low-resolution optical camera, a gigahertz-radar, a sound sensor, a pressure sensor, and/or an occupant counter for monitoring traffic through a passageway.

A method according to an exemplifying and non-limiting embodiment comprises varying intensity and/or color temperature of light emitted by the luminaires in accordance with a time of day and based on a predetermined rule.

A data processor program according to an exemplifying and non-limiting embodiment comprises data processor executable instructions for controlling a programmable data processor system to carry out actions related to a method according to any of the above-described exemplifying embodiments.

A data processor program according to an exemplifying and non-limiting embodiment comprises software modules for controlling luminaires. The software modules comprise data processor executable instructions for controlling a programmable data processor system to:
- receive, from presence sensors, occupancy data indicative of occupancies on sub-areas of a space illuminated with the luminaires,
- dim down one or more of the luminaires in response to a situation in which the occupancy data indicates that the sub-area illuminated by the one or more luminaires is unoccupied, and
- control the one or more luminaires to increase color temperature of light emitted by the one or more luminaires in response to the situation in which the occupancy data indicates that the sub-area illuminated by the one or more luminaires is unoccupied.

The above-mentioned software modules can be e.g. subroutines or functions implemented with a programming language suitable for the programmable data processor system.

A data processor program product according to an exemplifying and non-limiting embodiment comprises a data processor readable medium encoded with a data processor program according to an embodiment of invention.

A signal according to an exemplifying and non-limiting embodiment is encoded to carry information defining a data processor program according to an embodiment of invention.

The specific examples provided in the description given above should not be construed as limiting the scope and/or the applicability of the appended claims. Lists and groups of examples provided in the description given above are not exhaustive unless otherwise explicitly stated.

### A test case:

A test was performed in an open office area. Test subjects were located at one end of the open office area, where lighting was kept constant during the test. The intensity of light produced by luminaires at the other end of the office area was dimmed down to be 50 %, 70 %, 80 %, or 90 % of the intensity of light produced by luminaires at the end of the office area where the test subjects were located, and the color temperature of the light produced by the luminaires at the other end was adjusted to be 3000 K, 4000 K, 4500 K, 5000 K, or 5500 K. The color temperature of the light produced by the luminaires at the end of the office area where the test subjects were located was 4000K. The test subjects were asked to evaluate whether there was more light or less light at the other end than in their own location. The test was performed in late morning, so there was also external light entering the space via windows. The test subjects were instructed to give, in each situation, one of the following answers defined in Table 1 below:

**Table 1.**

| | |
|---|---|
| A1 | Clearly more light than Here |
| A2 | Slightly more light than Here |
| A3 | No difference |
| A4 | Slightly less light than here |
| A5 | Clearly less light than here |

The answers given by the test subjects 1-5 in different situations S1-S10 are presented in Table 2:

**Table 2. Answers given by test subjects.**

| Situation | Light output [%] | Color Temp [K] | Subject1 | Subject2 | Subjects | Subject4 | Subjects |
|---|---|---|---|---|---|---|---|
| S1 | 80 | 4000 | A2 | A3 | A3 | A3 | N/A |
| S2 | 70 | 4500 | A3 | A2 | A2 | A2 | A4 |
| S3 | 90 | 3000 | A2 | A4 | A1 | A3 | A4 |
| S4 | 80 | 4000 | A2 | A2 | A2 | A2 | A3 |
| S5 | 50 | 4500 | A3 | A2 | A3 | A5 | A3 |
| S6 | 60 | 5000 | A3 | A2 | A3 | A2 | A2 |
| S7 | 80 | 4000 | A2 | A1 | A2 | A3 | A3 |
| S8 | 70 | 5500 | A1 | A1 | A2 | A3 | A3 |
| S9 | 80 | 5000 | A1 | A1 | A2 | A2 | A3 |
| S10 | 80 | 3000 | A2 | A4 | A1 | A3 | A2 |

In Situation S3 where the light output was 90 % and the color temperature was 3000 K, the answers were: one "Slightly more light than Here", one "Clearly more light than Here", one "No difference", and two "Slightly less light than here", whereas in Situation S8 where the light output was only 70 % but the color temperature was 5500 K, the answers were: two "Clearly more light than Here", one "Slightly more light than Here", and two "No difference". Thus, the higher color temperature led to a perception of brighter light in average even if the intensity was lower.

## Claims

1. A management system for controlling luminaires, the management system comprising:
- presence sensors (103, 104, 203-206) configured to produce occupancy data indicative of occupancies on sub-areas of a space illuminated with the luminaires, and
- a control system (107, 207) responsive to the occupancy data and configured to dim down one or more of the luminaires in response to a situation in which the occupancy data indicates that the sub-area illuminated by the one or more luminaires is unoccupied,
**characterized in that** the control system is configured to increase color temperature of light emitted by the one or more luminaires in response to the situation in which the occupancy data indicates that the sub-area illuminated by the one or more luminaires is unoccupied.

2. A management system according to claim 1, wherein the control system comprises a central controller (112) communicatively connected with data transfer links to the luminaires and to the presence sensors.

3. A management system according to claim 1, wherein the control system (207) comprises controllers (208-211) installed in each of the luminaires, each of the controllers being configured to control one or more light emitting elements of the luminaire in which the controller is installed.

4. A management system according to any one of claims 1-3, wherein the presence sensors (103, 104) are placed apart from the luminaires.

5. A management system according to any one of claims 1-3, wherein the presence sensors (203-206) are installed in each of the luminaires.

6. A management system according to any one of claims 1-5, wherein the control system is configured to control input powers of at least two light emitting elements (117, 118) having different color temperatures in order to control the color temperature of light emitted by one of the luminaires (116) comprising the at least two light emitting elements.

7. A management system according to any one of claims 1-6, wherein each of the presence sensors comprises at least one of the following: a passive infrared sensor for detecting presence through motion, a thermal camera, an optical camera, a gigahertz-radar, a sound sensor, a pressure sensor, and an occupant counter for monitoring traffic through a passageway.

8. A management system according to any one of claims 1-7, wherein the control system is configured to vary color temperature of light emitted by the luminaires in accordance with a time of day and based on a predetermined rule.

9. A management system according to any one of claims 1-8, wherein the control system is configured to vary intensity of light emitted by the luminaires in accordance with a time of day and based on a predetermined rule.

10. A lighting system comprising:
- luminaires (113-116, 213-216) configured to illuminate a space, and
- a management system according to any one of claims 1-9 and configured to control the luminaires.

11. A method for controlling luminaires, the method comprising:
- receiving (301), from presence sensors, occupancy data indicative of occupancies on sub-areas of a space illuminated with the luminaires, and
- dimming down (302) one or more of the luminaires in response to a situation in which the occupancy data indicates that the sub-area illuminated by the one or more luminaires is unoccupied,
**characterized in that** the method comprises:
- increasing (302) color temperature of light emitted by the one or more luminaires in response to the situation in which the occupancy data indicates that the sub-area illuminated by the one or more luminaires is unoccupied.

12. A method according to claim 11, wherein the method comprises controlling input powers of at least two light emitting elements having different color temperatures in order to control the color temperature of light emitted by one of the luminaires comprising the at least two light emitting elements.

13. A data processor program for controlling luminaires, the data processor program comprising data processor executable instructions for controlling a programmable data processor system to:
- receive, from presence sensors, occupancy data indicative of occupancies on sub-areas of a space illuminated with the luminaires, and
- dim down one or more of the luminaires in response to a situation in which the occupancy data indicates that the sub-area illuminated by the one or more luminaires is unoccupied,
**characterized in that** the data processor program comprises data processor executable instructions for controlling the programmable data processor system to:
- control the one or more luminaires to increase color temperature of light emitted by the one or more luminaires in response to the situation in which the occupancy data indicates that the sub-area illuminated by the one or more luminaires is unoccupied.

14. A data processor program product comprising a non-transitory processor readable medium encoded with a data processor program according to claim 13.

## Patentansprüche

1. Verwaltungssystem zum Steuern von Leuchten, wobei das Verwaltungssystem Folgendes umfasst:
- Anwesenheitssensoren (103, 104, 203-206), die konfiguriert sind, um Belegungsdaten zu produzieren, die Belegungen von Teilbereichen eines Raums angeben, der mit den Leuchten beleuchtet wird, und
- ein Steuersystem (107, 207), das auf die Belegungsdaten reagiert und konfiguriert ist, um eine oder mehrere der Leuchten als Reaktion auf eine Situation, in welcher die Belegungsdaten angeben, dass der Teilbereich, der von der einen oder den mehreren Leuchten beleuchtet wird, nicht belegt ist, herunter zu dimmen,
**dadurch gekennzeichnet, dass** das Steuersystem konfiguriert ist, um die Farbtemperatur von Licht, das von der einen oder den mehreren Leuchten ausgestrahlt wird, als Reaktion auf die Situation, in welcher die Belegungsdaten angeben, dass der Teilbereich, der von der einen oder den mehreren Leuchten beleuchtet wird, nicht belegt ist, zu erhöhen.

2. Verwaltungssystem nach Anspruch 1, wobei das Steuersystem eine zentrale Steuerung (112) umfasst, die kommunikativ mit Datenübertragungsverbindungen zu den Leuchten und zu den Anwesenheitssensoren verbunden ist.

3. Verwaltungssystem nach Anspruch 1, wobei das Steuersystem (207) Steuerungen (208-211) umfasst, die in jeder der Leuchten installiert sind, wobei jede der Steuerungen konfiguriert ist, um ein oder mehrere Lichtausstrahlungselemente der Leuchte zu steuern, in welcher die Steuerung installiert ist.

4. Verwaltungssystem nach einem der Ansprüche 1-3, wobei die Anwesenheitssensoren (103, 104) von den Leuchten getrennt platziert sind.

5. Verwaltungssystem nach einem der Ansprüche 1-3, wobei die Anwesenheitssensoren (203-206) in jeder der Leuchten installiert sind.

6. Verwaltungssystem nach einem der Ansprüche 1-5, wobei das Steuersystem konfiguriert ist, um Eingangsleitungen von mindestens zwei Lichtausstrahlungselementen (117, 118) zu steuern, die verschiedene Farbtemperaturen aufweisen, um die Farbtemperatur von Licht zu steuern, das von einer der Leuchten (116) ausgestrahlt wird, die die mindestens zwei Lichtausstrahlungselemente umfasst.

7. Verwaltungssystem nach einem der Ansprüche 1-6, wobei jeder der Anwesenheitssensoren mindestens eines der Folgenden Elemente umfasst: einen passiven Infrarotsensor zum Erfassen der Anwesenheit durch Bewegung, eine Wärmekamera, eine optische Kamera, einen Gigahertz-Radar, einen Schallsensor, einen Drucksensor und einen Belegungszähler zum Überwachen von Verkehr durch einen Durchgang.

8. Verwaltungssystem nach einem der Ansprüche 1-7, wobei das Steuersystem konfiguriert ist, um die Farbtemperatur von Licht, das von den Leuchten ausgestrahlt wird, gemäß einer Tageszeit und basierend auf einer vorbestimmten Regel zu variieren.

9. Verwaltungssystem nach einem der Ansprüche 1-8, wobei das Steuersystem konfiguriert ist, um die Intensität von Licht, das von den Leuchten ausgestrahlt wird, gemäß einer Tageszeit und basierend auf einer vorbestimmten Regel zu variieren.

10. Beleuchtungssystem umfassend:
- Leuchten (113-116, 213-316), die konfiguriert sind, um einen Raum zu beleuchten, und
- ein Verwaltungssystem nach einem der Ansprüche 1-9, das konfiguriert ist, um die Leuchten zu steuern.

11. Verfahren zum Steuern von Leuchten, wobei das Verfahren Folgendes umfasst:
- Erhalten (301), von Anwesenheitssensoren, von Belegungsdaten, die Belegungen auf Teilbereichen eines Raums, der mit den Leuchten beleuchtet wird, angeben, und
- Herunterdimmen (302) einer oder mehrerer der Leuchten als Reaktion auf eine Situation, in welcher die Belegungsdaten angeben, dass der Teilbereich, der von der einen oder den mehreren Leuchten beleuchtet wird, nicht belegt ist,
**dadurch gekennzeichnet, dass** das Verfahren Folgendes umfasst:
- Erhöhen (302) der Farbtemperatur von Licht, das von der einen oder den mehreren Leuchten ausgestrahlt wird, als Reaktion auf die Situation, in welcher die Belegungsdaten angeben, dass der Teilbereich, der von der einen oder den mehreren Leuchten beleuchtet wird, nicht belegt ist.

12. Verfahren nach Anspruch 11, wobei das Verfahren das Steuern von Eingangsleistungen von mindestens zwei Lichtausstrahlungselementen umfasst, die verschiedene Farbtemperaturen aufweisen, um die Farbtemperatur von Licht, das von einer der Leuchten ausgestrahlt wird, die die mindestens zwei Lichtausstrahlungselemente umfasst, zu steuern.

13. Datenprozessorprogramm zum Steuern von Leuchten, wobei das Datenprozessorprogramm von einem Datenprozessor ausführbare Befehle zum Steuern eines programmierbaren Datenprozessorsystems umfasst, um:
- von Anwesenheitssensoren Belegungsdaten zu erhalten, die Belegungen von Teilbereichen eines Raums angeben, der mit den Leuchten beleuchtet wird, und
- eine oder mehrere der Leuchten als Reaktion auf eine Situation herunter zu dimmen, in welcher die Belegungsdaten angeben, dass der Teilbereich, der von der einen oder den mehreren Leuchten beleuchtet wird, nicht belegt ist,
**dadurch gekennzeichnet, dass** das Datenprozessorprogramm von einem Datenprozessor ausführbare Befehle zum Steuern des programmierbaren Datenprozessorsystems umfasst, um:
- die eine oder die mehreren Leuchten zu steuern, um die Farbtemperatur von Licht, das von der einen oder den mehreren Leuchten ausgestrahlt wird, als Reaktion auf die Situation zu erhöhen, in welcher die Belegungsdaten angeben, dass der Teilbereich, der von der einen oder den mehreren Leuchten beleuchtet wird, nicht belegt ist.

14. Datenprozessorprogrammprodukt, das ein nichtflüchtiges prozessorlesbares Medium umfasst, das mit einem Datenprozessorprogramm nach Anspruch 13 codiert ist.

## Revendications

1. Système de gestion pour commander des luminaires, le système de gestion comprenant :
- des capteurs de présence (103, 104, 203-206) configurés pour produire des données d'occupation indicatives des occupations sur des sous-zones d'un espace éclairé par les luminaires, et
- un système de commande (107, 207) sensible aux données d'occupation et configuré pour atténuer un ou plusieurs des luminaires en réponse à une situation dans laquelle les données d'occupation indiquent que la sous-zone éclairée par le ou les luminaires est inoccupée,
**caractérisé en ce que** le système de commande est configuré pour augmenter la température de couleur de la lumière émise par le ou les luminaires en réponse à la situation dans laquelle les données d'occupation indiquent que la sous-zone éclairée par le ou les luminaires est inoccupée.

2. Système de gestion selon la revendication 1, dans lequel le système de commande comprend un commandeur central (112) connecté de manière communicative avec des liaisons de transfert de données aux luminaires et aux capteurs de présence.

3. Système de gestion selon la revendication 1, dans lequel le système de commande (207) comprend des commandeurs (208-211) installés dans chacun des luminaires, chacun des commandeurs étant configuré pour commander un ou plusieurs éléments électroluminescents du luminaire dans lequel le commandeur est installé.

4. Système de gestion selon une quelconque des revendications 1 à 3, dans lequel les capteurs de présence (103, 104) sont placés à l'écart des luminaires.

5. Système de gestion selon une quelconque des revendications 1 à 3, dans lequel les capteurs de présence (203 à 206) sont installés dans chacun des luminaires.

6. Système de gestion selon une quelconque des revendications 1 à 5, dans lequel le système de commande est configuré pour commander les puissances d'entrée d'au moins deux éléments électroluminescents (117, 118) ayant des températures de couleur différentes de manière à commander la température de couleur de la lumière émise par un des luminaires (116) comprenant les au moins deux éléments électroluminescents.

7. Système de gestion selon une quelconque des revendications 1 à 6, dans lequel chacun des capteurs de présence comprend au moins un des éléments suivants : un capteur infrarouge passif, des capteurs pour détecter la présence par mouvement, une caméra thermique, une caméra optique, un radar gigahertz, un capteur sonore, un capteur de pression et un compteur d'occupants pour surveiller le trafic dans un passage.

8. Système de gestion selon une quelconque des revendications 1 à 7, dans lequel le système de commande est configuré pour faire varier la température de couleur de la lumière émise par les luminaires en fonction d'une heure de la journée et sur la base d'une règle prédéterminée.

9. Système de gestion selon une quelconque des revendications 1 à 8, dans lequel le système de commande est configuré pour faire varier l'intensité de la lumière émise par les luminaires conformément à une heure de la journée et sur la base d'une règle prédéterminée.

10. Système d'éclairage comprenant :
- des luminaires (113-116, 213-216) configurés pour éclairer un espace, et
- un système de gestion selon une quelconque des revendications 1-9 et configuré pour commander les luminaires.

11. Procédé de commande de luminaires, le procédé comprenant de :
- recevoir (301), à partir de capteurs de présence, des données d'occupation indicatives des occupations sur des sous-zones d'un espace éclairées par les luminaires, et
- diminuer l'intensité (302) d'un ou plusieurs des luminaires en réponse à une situation dans laquelle les données d'occupation indiquent que la sous-zone éclairée par le ou les luminaires est inoccupée,
**caractérisé en ce que** le procédé comprend de :
- augmenter (302) la température de couleur de la lumière émise par le ou les luminaires en réponse à la situation dans laquelle les données d'occupation indiquent que la sous-zone éclairée par le ou les luminaires est inoccupée.

12. Procédé selon la revendication 11, dans lequel le procédé comprend le commande des puissances d'entrée d'au moins deux éléments électroluminescents ayant des températures de couleur différentes afin de commander la température de couleur de la lumière émise par un des luminaires comprenant les au moins deux éléments électroluminescents.

13. Programme de processeur de données pour commander des luminaires, le programme de processeur de données comprenant des instructions exécutables par processeur de données pour commander un système de processeur de données programmable pour :
- recevoir, à partir de capteurs de présence, des données d'occupation indicatives d'occupations sur des sous-zones d'un espace éclairées par les luminaires, et
- diminuer l'intensité d'un ou plusieurs des luminaires en réponse à une situation dans laquelle les données d'occupation indiquent que la sous-zone éclairée par le ou les luminaires est inoccupée,
**caractérisé en ce que** le programme de processeur de données comprend des instructions exécutables par processeur de données pour commander le système de processeur de données programmable pour :
- commander le ou les luminaires pour augmenter la température de couleur de la lumière émise par le ou les luminaires en réponse à la situation dans laquelle les données d'occupation indiquent que la sous-zone éclairée par le ou les luminaires est inoccupée

14. Produit de programme de processeur de données comprenant un support lisible par processeur non transitoire codé avec un programme de processeur de données selon la revendication 13.
